Europäisches Patentamt

European Patent Office

Office européen des brevets

(11) Publication number : **0 496 717 A1**

(12) **EUROPEAN PATENT APPLICATION**

(21) Application number : 92870010.3

(22) Date of filing : 16.01.92

(51) Int. Cl.$^5$ : **H04B 3/54, H04B 1/66**

(30) Priority : **21.01.91 BE 9100042**

(43) Date of publication of application :
**29.07.92 Bulletin 92/31**

(84) Designated Contracting States :
**BE CH DE ES FR GB IT LI NL PT**

(71) Applicant : **VYNCKIER Naamloze Vennootschap**
**Nieuwe Vaart 51**
**B-9000 Gent (BE)**

(72) Inventor : **Moeneclaey, Mark**
**Groenpark 31**
**B-9840 De Pinte (BE)**
Inventor : **Pollet, Thierry**
**Piro-Lannoo straat 3B**
**B-8511 Aalbeke (Kortrijk) (BE)**
Inventor : **Candries, Koen**
**Steenweg op Blaasveld 46**
**B-2801 Heffen (Mechelen) (BE)**
Inventor : **Schelstraete, Patrick**
**C. Buyssestraat 6E**
**B-9850 Nevele (BE)**

(74) Representative : **Claeys, Pierre et al**
**Bureau Gevers rue de Livourne 7 Bte 1**
**B-1050 Bruxelles (BE)**

(54) **A method and a device for transmitting the data over a noisy medium.**

(57) A method and a device for transmitting data within a predetermined frequency range over a noisy medium, wherein a spread spectrum data independent signal formed by a pseudo noise code is mixed with the data to be transmitted for forming a spread spectrum datasignal, which datasignal is modulated and at least 50 % of the power of the modulated datasignal is transmitted within said frequency range, wherein each chip of the data signal to be transmitted is substituted by a wave shaped signal having a raised cosine spectrum, which wave shaped signal is thereafter truncated by means of a truncation window whereby the spectrum broadening is kept limited within said frequency range in order to obtain a further wave shaped signal which is, considered in the time domain, limited within the time of a predetermined period.

Fig. 3.

The invention relates to a method for transmitting data within a predetermined frequency range over a noisy medium, in particular the electricity mains network, wherein a spread spectrum data independent signal formed by a pseudo-noise code comprising $N (N \in \mathbb{N} \setminus \{0\})$ chips per databit is generated and mixed with the data to be transmitted for forming a spread spectrum datasignal, which datasignal is modulated on a carrier having a frequency $f_o$ chosen within said frequency range and wherein a chip frequency $f_c$ is used which is substantially a whole fraction ($M$, $2f_o = f_c M$) of the double of the carrier frequency and at least 50 % of the power of the modulated datasignal is transmitted within said frequency range, and wherein a correlation operation with the pseudo-noise code is applied to the received data signal for extraction of the data. The invention also relates to a device for performing such a method.

Such a method and device is known from the article of Robert A. Piety entitled : "Intrabuilding data transmission using power-line wiring" published in Hewlett-Packard Journal part 38 n° 5, 1987 Palo Alto US, pages 35-40. In this article there is described how a spread spectrum data independent signal is generated with which the data to be transmitted is mixed. The thus formed datasignal is modulated on a carrier whose frequency is chosen within the frequency range within which the data has to be transmitted. By further applying a correlation operation with the pseudo-noise code at the receiver side the data to be transmitted can be extracted in a simple and reliable manner.

As a medium over which the datasignal is transmitted the mains network is used. Data communication over the mains is i.a. applied for the automatic reading of the actual index of the electricity meter, in order to detect fraud, or for switching from the one tariff regulation to another one, for example from night to day tariff. The nature itself of the mains does not render the latter directly suitable for data communication. Indeed the mains is a noisy medium because i.a. a lot of perturbations are induced on that mains by on/off switching of loads, by means of perturbation signals injected onto the mains by connected devices etc... Transmission over the mains network includes that measures have to be taken in order to transmit a signal over such a noisy medium. Because attenuation levels of 60 to 70 dB of the transmitted signal are no exceptions, they have also to be taken into account during the transmission. The use of a pseudo-noise code having a spread spectrum and the modulation on a carrier of the data signal to be transmitted enables to transmit the data in a reliable manner over the mains.

A drawback of the known method is however that the side lobes of the modulated datasignal to be transmitted still comprises a large amount of energy. However because the allowed frequency range for data transmission via the mains is strictly limited, namely between 9 KHz and 95 KHz, care has to be taken that substantially no signal is present outside the allowed frequency range. The latter could lead to perturbations in further signals present in the frequency ranges situated outside the allowed range. Because by the known method and device there is still a large amount of signal present in the side lobe this leads to the presence of energy outside the allowed range, unless extensif filtering is applied.

It is an object of the invention to provide a method and a device for transmission of data over a noisy medium wherein only a substantially reduced fraction of the datasignal is transmitted outside the allowed range, without having bad consequences for the quality of the datasignal to be transmitted, and for further signals which would eventually be present outside the allowed range.

A method according to the invention is therefore characterized in that each chip of the datasignal to be transmitted is each time substituted while maintaining the chip value by a wave shaped signal having a raised cosine spectrum, which spectrum is substantially inside said frequency range and which wave shaped signal is thereafter truncated by means of a truncation window whereby the spectrum broadening is kept limited within said frequency range in order to obtain a further wave shaped signal which is, considered in the time domain, limited within the time of a predetermined period, which truncation window is chosen in such a manner that at least the main lobe of the spectrum of said wave shaped signal is substantially completely inside said frequency range and wherein the signal contribution of the different wave shaped signals at a same point in time are added together.

A device according to the invention is characterized in that the transmitter comprises substitution means provided for substituting while maintaining the chip value each chip of the data signal to be transmitted by a wave shaped signal having a raised cosine spectrum and being substantially inside said frequency range, which transmitter further comprises truncation means connected with said substitution means and which are provided for truncating said wave shaped signal by a truncation window whereby the spectrum broadening is limited within said frequency range in order to obtain a further wave shaped signal which is, considered in the time domain, limited within the time of a predetermined period, which transmitter comprises adding means connected with said truncation means and provided for each time adding together the signal contribution of the different wave shaped signals at a same time. By substituting each chip by a wave shaped signal having a raised cosine spectrum there is obtained, considered in the frequency domain, a band limited signal. The use of a wave shaped signal having a raised cosine spectrum however leads, considered in the time domain, in theory to an infinite time signal. Practically however that time signal is finite for technical reasons. This implies in fact an implicite truncation of the signal. Such a truncation would however lead to a spectrum broadening if it would not be carefully chosen. That spectrum broadening would than have for consequence that signal would be present outside the allowed frequency range. By now applying a truncation window wherein the spectrum broadening is limited substantially no signal is outside to the allowed range. In this manner there is obtained, considered in the time domain, a time limited signal which substantially comprises all the information of the data to be transmitted. The truncation by means of a truncation window however leads, considered in the frequency domain, to a signal which is a little bit outside the allowed frequency range, however the intensity of which is so limited that this fraction of the signal gets lost in the noise.

Of course the substitution is known from the communication theory and the truncation is known from signal processing, however the invention is mainly distinguished from the known technique by the fact that this known substitution can not directly be applied since this would lead to unacceptable spectrum broadening. The invention is mainly based on the insight that through a combination of substitution and a careful choice of truncation the problem of unacceptable spectrum broadening is solved. The combination substitution-truncation offers the possibility to transmit within an arbitrary chosen range a spread spectrum digital signal without disturbing effects arising outside the chosen range.

A first preferred embodiment of a method according to the invention is characterized in that for said truncation window there is chosen a period corresponding with the one of one databit. The construction of the transmitter is thus simplified.

Preferably for said raised cosine spectrum there is chosen a rolloff factor comprised within 0.25 and 0.75. This allows to keep the power in the side lobes of the datasignal to be transmitted small. An optimum is thus obtained between range limitation and attenuation of the extremities of the signal considered in the time domain.

A second preferred embodiment of a method according to the invention is characterized in that said modulated datasignal is transmitted within the frequency range situated between 40 and 90 KHz, and said datasignal is modulated on a carrier having a frequency of substantially 65 KHz and wherein $M = 4$ is chosen for said fraction. Standards impose the frequency range of 9 to 95 KHz for data communication by the utilities. By chosing the frequency range between 40 and 90 KHz there is largely kept within the allowed range and the risk of stepping out of the allowed range is substantially eliminated. The choice of the lower limit of 40 KHz is based on the fact that below that limit the impedance of the mains is low and signal injection becomes difficult. The choice of the carrier simplifies the modulation within the chosen range and further offers the advantage that the chosen frequency range is well used. Moreover this has the advantage, because it is situated in the middle of the chosen frequency range that the signal can be symmetrically spread within the frequency range.

A third preferred embodiment of a method according to the invention is characterized in that a sequential inversion keying (SIK) is applied while mixing the data and the pseudo noise code. This choice allows a great distinction (largest possible Euclidian distance ; antipodal system) in the vector representation between a databit with value "1" to be transmitted and a databit with value "0". This has moreover the advantage that on the receiver side a change of the transmitted bit value implies a jump in the correlation plane towards the other half plane, which simplifies the detection of the bitvalue change.

A fourth preferred embodiment of a method according to the invention is characterized in that for a databit to be transmitted there is chosen a first time window extending over at least a first fraction of a bitperiod of the databit to be transmitted and at least a second fraction of the bitperiod of at least one databit preceding the databit to be transmitted and wherein for each value of the databit to be transmitted there is composed a first series of $2^m$ signal patterns, m indicating the number of bits preceding the databit to be transmitted of which signalsegments are present within the first time window, and wherein an $i^{th}(1 \leq i \leq 2^m)$ signal pattern of said first series comprises the wave shaped signal segment belonging to the first time window and obtained by substitution and truncation and belonging to said value of the databit to be transmitted as well as the wave shaped signal segments belonging to that first time window obtained by substitution and truncation which belongs to the $i^{th}$ bitcombination of the $2^m$ possible bit combinations, which first series is stored in a first memory. This allows to take into account on beforehand the interbit interference with a preceding bit, thus enabling to prevent that a spectral broadening arises by the transmission of permuting databits.

It is favourable that the signal patterns of said first series are segmentwise stored into the first memory on address locations which are addressable on the basis of a databit sequence of the data to be transmitted, and that for transmitting the modulated datasignal for each databit to be transmitted, an address is generated on the basis of the bitvalue of the databit to be transmitted and the bitvalue of the m databits preceding the databit to be transmitted and wherein said first memory is addressed by said generated address. This considerably simplifies the transmission of a datasignal to the reading of a memory.

By a fifth preferred embodiment of a method according to the invention the received modulated datasignal

EP 0 496 717 A1

is sampled and demodulated for deriving a chip sequence, and wherein the chip sequence is synchronised with a pseudo-noise code generated at the receiver side and corresponding with the one used in the transmitted data signal. Such a method is characterized in that for synchronisation use is made of a third memory wherein the pseudo noise code values and their inverse are stored, which third memory is addressed by means of the demodulated elements of the chip sequence. The correlation operation is thus realised in an efficient manner.

It is favourable that for recording the whole correlation curve, there is delayed over 1-chip period per databit period while addressing the stored pseudo-noise code. This allows to determine in an easy way the complete correlation curve and to recognize that data is received which has been mixed with the chosen pseudo-noise code.

A sixth preferred embodiment of a method according to the invention is characterized in that the received modulated datasignal is supplied to a finite impulse response filter (F.I.R.) for correlation with said pseudo-noise code. This allows synchronisation within the time of one databit.

A seventh preferred embodiment of a method according to the invention is characterized in that by mixing the data and the pseudo-noise code a sequential inversion keying is applied and that for extraction of the data value from the received modulated datasignal there is checked if with respect to a previous determination a jump from the one to the other half plane within the points in the correlation plane has taken place. Detection of the bitvalue of the received databit is thus easy to realise.

Preferably an n-bits ($n \geq 1$) analog-digital conversion is applied to the received modulated datasignal and the presence of data in the modulated datasignal is checked by determining the ratio of the greatest with the second greatest maximum of the correlation values and by verifying if said ratio exceeds a further predetermined threshold value. The presence of data in the received signal is thus fast and efficiently determined.

An eighth preferred embodiment of a method according to the invention is characterized in that there is sampled with a sampling frequency which is four times the carrier frequency and that the signal output of the finite impulse response filter comprises a sequence of phase- and quadrature values even as the inverted values of those phase- and quadrature values and wherein said sequency is separated in a first respectively a second subsequence comprising the phase, respectively the quadrature values, and wherein the values of each subsequence are each time converted to a same sign. The correlation and demodulation operation is thus realised in a fast and an efficient manner.

A first preferred embodiment of a device according to the invention is characterized in that said substitution means are provided for determining a first time window for a databit to be transmitted, which first time window extends over at least a first fraction of the bit period of the databit to be transmitted and at least a second fraction of the bit period of at least one databit preceding the databit to be transmitted, which transmitter further comprises a signal pattern generator connected with the substitution means and provided for generating a first series of $2^m$ signal patterns for each value of the databit to be transmitted whereby m indicates the number of databits preceding the databit to be transmitted of which signal segments are present in the first time window and wherein an $i^{th}$ ($1 \leq i \leq 2^m$) signal pattern of said first series comprises the wave shaped signal segments belonging to the first time window and obtained by substitution and truncation and belonging to said value of the databit to be transmitted even as the wave shaped signal segments belonging to the first time window and obtained by substitution and truncation belonging to the $i^{th}$ bitcombination of the 2m possible bitcombinations. The use of a signal pattern generator enables an easy implementation of the transmitter. Furthermore generation of such a series offers the possibility to take into account while sending the interbit interference.

Preferably said signal pattern generator is formed by a first memory and wherein said transmitter comprises a first address generator connected with an address input of said first memory, said address generator having a first input for receiving a databit to be transmitted and a second input for receiving a clocksignal formed on the basis of the chip frequency, which address generator further comprises a delay element for delaying over at least one databit transmission period the supplied databit, which address generator is provided for generating an address on the basis of the supplied databit and the databit supplied by the delay element. This enables to directly address the memory on the basis of the databit to be transmitted, which simplifies the transmission.

A second preferred embodiment of a device according to the invention is characterized in that said third memory is provided for storing at least two sets of modulated datasignals and wherein the modulated datasignal of each set are formed on the basis of a pseudo-noise code belonging to that set. The choice of two different pseudo-noise codes is thus possible.

A third preferred embodiment of a device according to the invention is characterized in that the synchronisation unit comprises a further address generator having an input for receiving the chip sequence elements, which further address generator comprises a second counter having a clock input for receiving a sampling frequency signal and which is provided for generating a second counting value on the basis of said sampling frequency signal, which further address generator is provided for generating an address formed by a first respectively a second address part comprising said chip sequence element respectively said second counting

4

EP 0 496 717 A1

value. The supplied elements from the chip sequence can thus directly be used for addressing the third memory.

It is favourable that the third memory is provided for storing at least two different pseudo-noise code sets with each time their inverse value. The receiver is thus made suitable to operate withmore than one pseudo-noise code.

A fourth preferred embodiment of a device according to the invention is characterized in that the receiver comprises a multi-bit analog-digital convertor. A several level detection is thus possible making the receiver more reliable.

It is favourable that said correlator comprises a finite impulse-response filter which is provided with serially switched delay elements for each time delaying the supplied chip sequence elements over a sampling period, which filter further comprises multipliers provided for multiplying the supplied chip value with the value of the pseudo-noice code and for therewith forming a product value, which multipliers are further connected with an adder provided for adding the supplied product values and thereof forming a correlation value as well in the phase as the quadrature channel. Synchronisation within the period of one databit is thus possible.

The invention will now be described by means of the drawing showing preferred embodiments. In the different figures a same reference sign has been assigned to a same or an analogous element.

Figure 1 shows how a datasignal is buil up.

Figure 2 illustrates the substitution of subsequent chips from a datasignal by a wave-shaped signal having a raised cosine spectrum.

Figure 3 illustrates the truncation and modulation of the substituted signal.

Figure 4 shows the eyediagram of the transmitted signal.

Figure 5 shows an example of the spectrum of the modulated datasignal to be transmitted.

Figure 6 shows an elementary realisation of a transmitter for transmitting a modulated datasignal.

Figure 7 shows a preferred embodiment of a transmitter for transmitting a modulated datasignal.

Figure 8 illustrates how the interbit interference is taken into account.

Figure 9 shows a first preferred embodiment of a receiver according to the invention.

Figure 10 illustrates an example of a differentially encoded data.

Figure 11 shows the correlation value in the correlation plane of the data of figure 10.

Figure 12 gives an example of the content of the third memory being part of a correlator shown in figure 9.

Figure 13 shows a second preferred embodiment of a receiver according to the invention.

Figure 14 illustrates the correlation values at the output of the FIR filter belonging to the receiver of figure 13.

Figure 15 resp. 16 gives the correlation value for the phase axis resp. quadrature axis such as formed by the data processing unit being part of the receiver shown in figure 13.

For the transmission of data over a noisy medium it is necessary to code the signal and in particular at the receiver's side to digitise in order to apply processing on the received signal thus enabling to extract from the received signal the transmitted data in the embodiment to be described hereunder there will be referred, only by way of example, to a binary signal which is transmitted over the mains. The invention is however not limited to transmission over the mains but is also applicable to other noisy media, such as for example railway lines, manufacturing halls etc... Under noisy medium there has to be understood a medium which is a priori less suitable for data transmission because on that medium other data disturbing signals are already present, which further can have a comparable signal intensity.

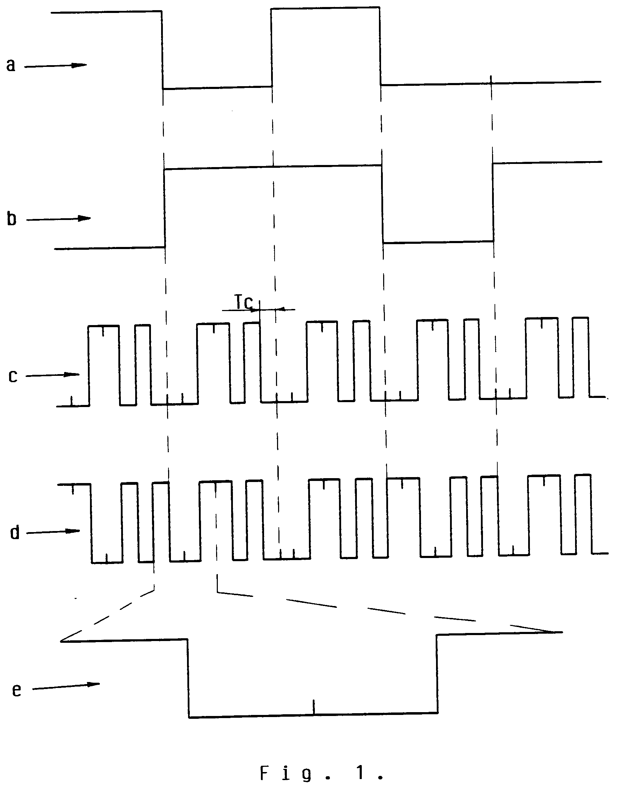

The wave a of figure 1 shows an example of a dataword to be transmitted, for example a 5-bit dataword 10100. Preferably the data to be transmitted is differentially coded on beforehand. The wave pattern b from figure 1 shows the result of a differential coding applied to wave a. By that differential coding each "0" bit or low level present in the datastream to be transmitted, will result in a transition in the differential coded datastream. Each "1" bit or high level on the other hand will not cause a transition in the differential coded datastream. The differential coding allows some simplification of the receiver and of the transmission protocol, because it is thus not necessary to transmit reference bits at the beginning of the data to be transmitted.

The differentially coded datastream is thereafter mixed with a spread spectrum data independent signal.

This data independent signal is formed by a pseudo-noise code comprising $N(N \in {}_{I\!N} \setminus \{0\})$ chips a databit. Under "chip" there has to be understood a code element of a codeword that is transmitted within a period $T_c$. In the example c of figure 1 there are illustrated, for the sake of clarity, seven chips per databit. Preferably however use is made of $N = 63$ chips per databit because a better immunity against disturbing signals is thus obtained. For the choice of the pseudo-noise code itself there are several possibilities such as for example an M-sequence, a Gold code or a K-sequence such as described in EPA 0 195 573. So it is possible to choose within a family of codes of which the cross correlation is low and enabling "Code Division Multiple Access" (more signals each with different codes can be simultaneously transmitted).

Preferably a Sequential Inversion Keying (SIK)is applied by mixing the data and the pseudo-noise code. The wave pattern d of figure 1 illustrates such a keying. By this SIK the pseudo-noise code itself is taken for a databit with a value "1", while use is made of the inverted pseudo-noise code for a databit with value "0". This has at the receiver side the advantage that a change of the transmitted bit value will have as consequence a jump to the other half plane in the correlation plane. The detection of the bitvalue of the transmitted databit is thus simplified.

Due to the mixing of the data with the data independent signal a datasignal having a spread spectrum is formed. That datasignal is built up of a sequence of chip extracts e shown in figure 1. The transmission over a noisy medium of the datasignal is realized by modulating the datasignal on a carrier wave. The frequency of the carrier wave is now chosen in such a manner that it is within the frequency range, within which the transmission has to take place.

For transmission over the mains the frequency range 9-95 KHz is available. Preferably however a frequency range 40-90 KHz is chosen because with a frequency larger than 90 KHz there is a danger that the adjacent range could be disturbed and with a frequency lower than 40 KHz the impedance of the network is too low which renders the injection of the signal difficult. It will however be clear that the method according to the invention is not limited to the frequency range 9-95 KHz.

Preferably there is now chosen a carrier frequency of approximately $f_o$ = 65 KHz which is thus substantially in the middle of the chosen frequency range (40-90KHz). The choice of that modulation frequency has the advantage that the power of the datasignal to be transmitted is substantially symmetrically spread at both sides of that carrier and that the power will thus mainly be kept limited within the prescribed range.

The chip frequency $f_c$ (the number of chips a second) is now so chosen that at least 50 % of the power of the modulated datasignal is transmitted within said frequency range.

The modulated datasignal however shows, considered in the frequency domain, side lobes which signifies that power of the datasignal to be transmitted could be present outside the allowed frequency range.

The power present outside the allowed frequency range has however to be kept limited to a minimum in order not to disturb further signals present outside the allowed frequency range. In order to keep to a minimum that power present outside the allowed frequency range there is now applied a processing on the datasignal before the datasignal is modulated with the carrier. That processing comprises the substitution of each chip of the datasignal to be transmitted by a wave shaped signal having a raised cosine spectrum.

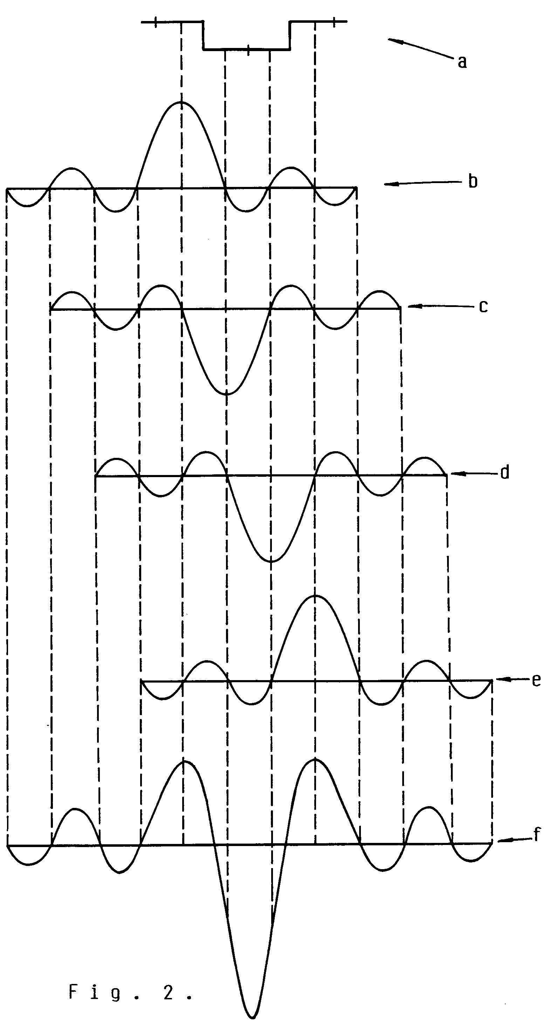

This substitution is illustrated by means of a simplified example shown in figure 2. The chip sequence 1001 illustrated under a in figure 2 is the same as the one illustrated under e in figure 1. For sake of clarity the preceding and subsequent chips to that chip sequence are not taken into account for this substitution operation, this however does not render the principle of the substitution invalid. The first chip, with chip value "1", from that chip sequence is now substituted by the wave shaped signal having a raised cosine spectrum and illustrated under b in figure 2. The wave shaped signal is preferably chosen in such a manner that the zero crossing each time exactly corresponds with a whole multiple of the chip period which keeps the interchip interference limited to a minimum. The maximum of the wave shaped signal b is thus situated on a moment in time which corresponds with the zero crossing of the wave shaped signals c, d and e. At that moment in time the interchip interference is than zero. This has than on its turn again positive consequences for the detection of the received signal which is detected in the neighbourhood of such a maximum. The second chip, with chip value "0" , of the represented chip sequence is substituted by the wave shaped signal represented under c in figure 2. Because this chip has the value "0", it is substituted by a wave shaped signal which is the inverse of the wave shaped signal used to substitute the chip with value "1". In this manner the chip value is maintained by that substitution operation. Because that second chip is situated one period ahead with respect to the first chip, the wave top with most of the power of the wave shaped signal substituting the second chip is of course situated one period further than the one of the wave shaped signal substituting the first chip. The substitution of the third and the fourth chip of the represented chip sequence is realized in an analogous manner. The substituted wave shape is represented under d and e in figure 2.

A wave shaped signal showing a raised cosine spectrum is given by the equation given hereunder :

$$x(t) \;=\; \frac{\sin \pi t/T}{\pi t/T} \cdot \frac{\cos \beta \, \pi t/T}{1 - 4 \, \beta^2 \, t^2 /T^2}$$

wherein β indicates the rolloff factor and T the chip period. As is illustrated by this equation and by figure 2, the main part of the power is concentrated around the maximum of the wave shaped signal. The raised cosine spectrum thus allows, considered in the frequency domain, to limit the signal within the desired frequency range. As rolloff factor there is chosen a value situated between 0.25 and 0.75. Preferably however a rolloff factor of almost 0.5 is chosen because this provides a larger eye in the eye diagram. With values lower than 0.25 the eye diagram will get closed, which substantially deteriorates the quality of the signal. With values larger than 0.75 the signal is spread over a too large band width.

The substitution of each chip by a wave shaped signal having a raised cosine spectrum has however for consequence that, considered in the time domain, there is obtained an infinite signal. There is now for each chip signal present over a multiple of the chip period instead than over one chip period. This has for consequence that the signal contribution of the different wave shaped signals at a same time has each time to be added together in order to obtain the total datasignal. In order to illustrate the latter there is given under f in figure 2 the wave shaped signal obtained by adding together the wave shaped signals represented under b, c, d and e.

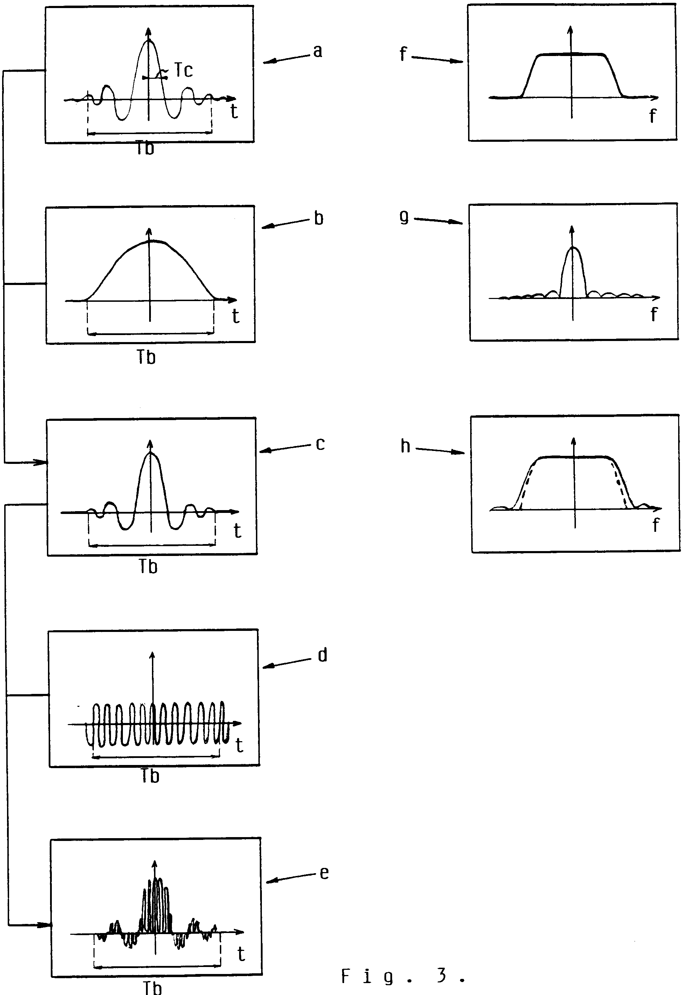

The substitution of each chip by a wave shaped signal having a raised cosine spectrum offers indeed a band limited signal which, considered in the frequency domain, however gives a signal with an infinite response in the time domain. Practically however that signal is finite for technical reasons because it is impossible to digitise a theoretically infinite signal. This implies that an implicit truncation is applied on the signal which leads to a spectrum broadening which, considered in the frequency domain, could lead to the presence of signal outside the allowed range. The wave shape a illustrated in figure 3 shows such a theoretically infinite signal. In that figure the period $T_b$ represents the one of 1 bit and $T_c$ the one of one chip. Under f there is in that figure 3 than represented the same signal as illustrated under a but now considered in the frequency domain. As appears from that figure there is still an amount of signal present outside the period $T_b$. This leads then to an interchip and interbit interference in the time domain. It is thus necessary to limit this expansion in the time of the signal.

In order to limit now said time expansion and also the interchip and interbit interference the wave shaped signal is truncated by a carefully chosen truncation window. Under b in figure 3 such a time window is represented. The truncation window is chosen in such a manner that at least the maximum peak of the wave shaped signal is substantially completely within that window. The truncation window is further chosen in such a manner that the spectrum broadening is limited within the allowed frequency range. Preferably the duration of the truncation window is chosen the same as the one of the bit period. Because however the originally finite frequency domain (figure 3f) becomes infinite by means of the truncation with the truncation window (figure 3g) the truncation window has to be carefully chosen. A choice of a $(\sin x)^Q$ function with $Q > 1$ offers, considered in the time domain, a pattern that smoothly goes to zero signifying the lowest broadening in the frequence range. The larger Q, the more fluent the function will go to zero for $x = 0$ and $x = 2\,\pi$rad.

Under c, respectively h in figure 3 the result is shown for the time resp. the frequency domain obtained by applying that truncation window to the wave shaped signal with a raised cosine spectrum. As can be seen in this figure the application of that truncation window has for consequences that now outside the truncation window, considered in the time domain, there is no more signal present. On the other hand, in the frequency domain, there is signal present outside the allowed frequency range. However the power of the latter signal is so limited that communication in the neighbouring frequency ranges will not be disturbed because the power of that signal present outside the allowed frequency range is below the noise level such as allowed by the standard.Especially in a noisy medium that signal will be completely lost in the noise and will thus not form a disturbing element.

It will be clear that the example shown in figure 3 is not the only choice for a truncation window. It is also possible to choose a truncation window with a period of more than 1 bit period or to choose the truncation window asymetrically with respect to the main lobe of the wave shaped signal.

The addition of the signal contribution of the different wave shaped signals is preferably applied after application of the truncation window to those wave shaped signals. This enables not to take into account the contribution of the signal situated outside the window. The obtained datasignal is thereafter modulated, with a carrier wave such as for example represented under d in figure 3, in order to obtain a modulated datasignal (e, figure 3). That modulation is performed by multiplying the datasignal with the carrier which leads to a modulated datasignal. Because every chip has been substituted while maintaining its sign by a wave shaped signal, the signal will have a same pattern as the one which would have been obtained by applying to the spread spectrum datasignal a Bi-Phase Shift Keying (BPSK). In a comparable manner a QPSK keying could be implemented.

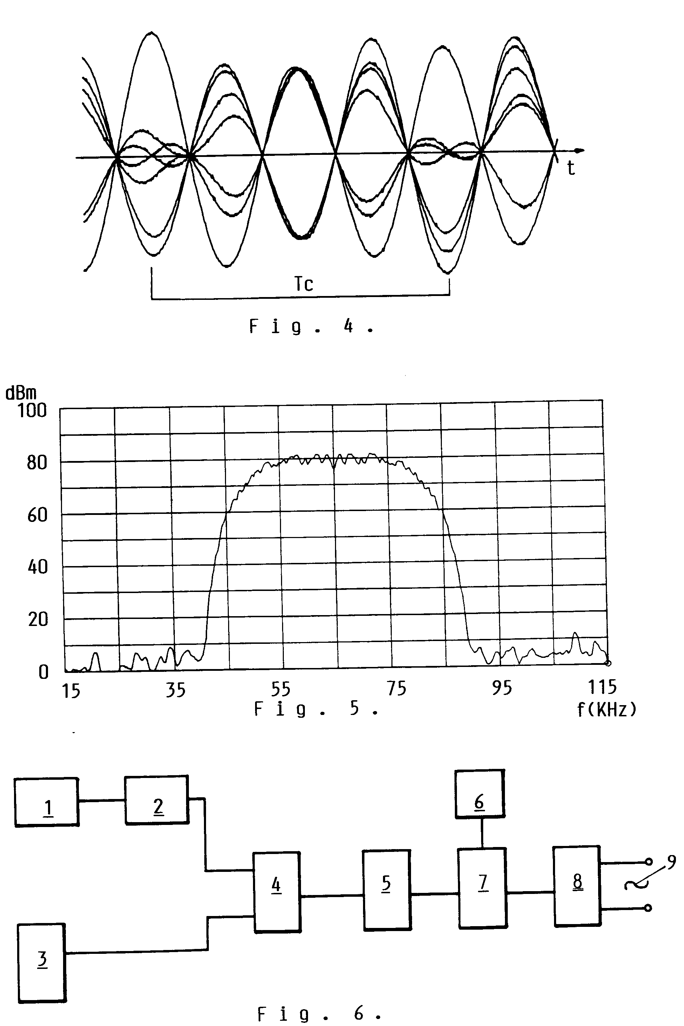

In order to obtain a maximum eye opening in the eye diagram of the band transmission pulse as shown in figure 4 the double of the carrier frequency $f_o$ should be a whole multiple M ($M \in \mathbb{N} \setminus \{0\}$) of the chip frequency $f_c$, in such a manner that $2f_o = f_c . M$. Together with the preceding condition for $f_c$ this leads to a preferred embodiment wherein M = 4 or $f_c = 32.5$ KHz by $f_o = 65$ KHz. The thus formed spectrum is shown in figure 5, clearly showing that the main part of the power of the transmitted datasignal is present within the frequency range 40-90 KHz. In that figure 5 the horizontal resp. vertical axis gives the frequency in KHz resp. the power in dBm.

The number $f_b$ databits per second that is transmitted with modulated datasignal is thus fully determined by the choice of $f_c$ and N and comprises in that embodiment fb = $f_c$/N = fb = 515.87.

7

Figure 6 shows an elementary realisation of a transmitter for transmission of a modulated datasignal as described herebefore. The transmitter which is part of the device according to the invention comprises a data source 1, for example formed by an electricity meter or a calling station at the producer side. The data source 1 is connected with a differential encoder 2 which is suitable to differentially code the supplied data. An output of the encoder 2 is connected with a first input of a mixing member 4 whose second input is connected with a codeword generator 3. The codeword generator 3 is suitable to generate said pseudo-noise code. The data source 1, the encoder 2, the codeword generator 3 and the mixing member 4 together form a datasignal generator.

The mixing member 4 forms the datasignal by mixing the encoded databit with a pseudo-noise code. Thereby, such as already described, use is preferably made of a sequential inversion keying (SIK). The datasignal is supplied to substitution-, truncation- and adding-means 5 which are provided to realise the herebefore described substitution of each chip by a wave shaped signal having a raised cosine spectrum even as to apply to that wave shaped signal the truncation window and to each time add together the signal contribution of the different wave shaped signal at the same time. The thus obtained datasignal is thereafter supplied to a modulator 7 which also receives the carrier originating from a carrier generator 6. The modulator enables a modulation of the datasignal on the carrier. The modulator comprises a chip frequency generator which is provided for the generating a chip frequency $f_c = 2f_0/M$. Thereafter the modulated datasignal is transmitted on the medium 9 by means of an interface 8.

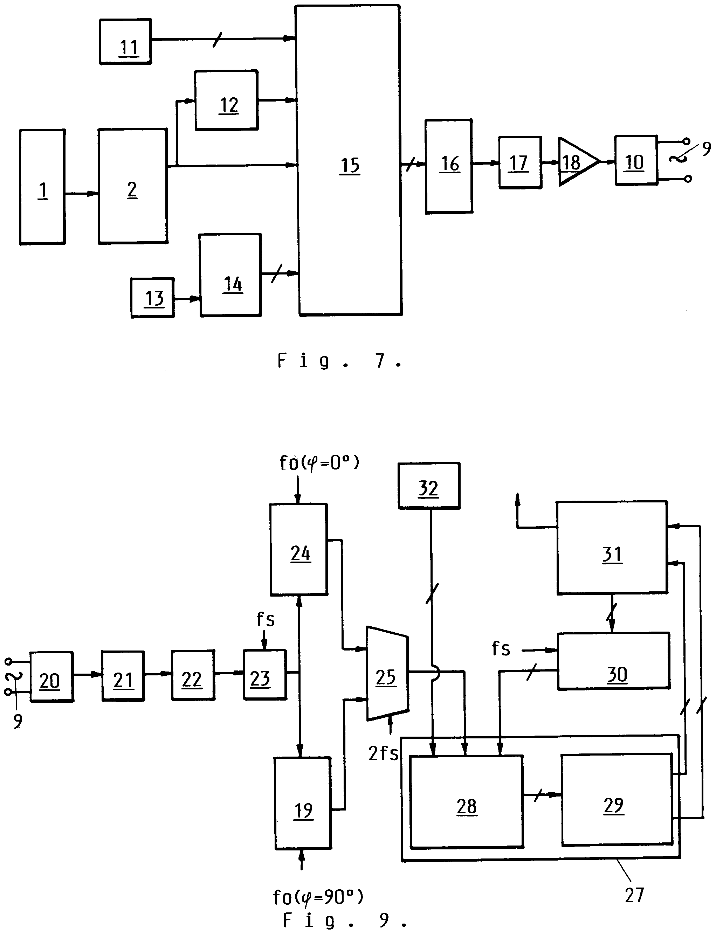

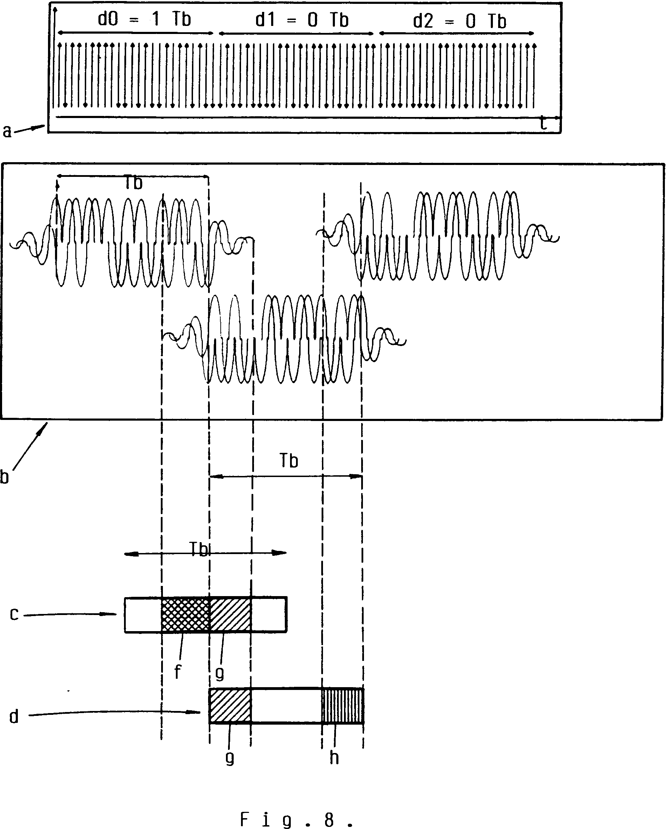

Figure 7 shows a preferred embodiment of a transmitter according to the invention. The transmitter, which is suitable to generate a spread spectrum signal, comprises a wave pattern generator 15 formed by a first memory, preferably an EPROM wherein predetermined wave segments to be transmitted are stored. The address input of the first memory 15 is connected with the encoder 2, a delay-element 12 and a counter 14 together form an address generator. Preferably the first memory is page or segment organized memory enabling to store on each page or segment different wave patterns, each time determined on the basis of a chosen pseudo-noise code. By the latter embodiment the address input of the memory is further connected with a pseudo-noise code selector 11 which acts as an address generator and in function of the chosen pseudo-noise code each time selects the thereby belonging memory part. This makes the transmitter suitable to operate with different datasignals, each time formed on basis of a different pseudo-noise code.

The counter 14 is fed by a clocksignal originating from a clockgenerator 13 which is suitable to generate clocksignals with a frequency $N_s \times f_c$. Hereby $N_s$ represents the number of samples that is clocked out for each chip at the transmitter side. The delay element 12 is provided to delay the encoded data over a period of one databit. It will be clear that when the intersymbol interference to be taken into account is considered over more than one preceding bit, the delay element has to be suitable to delay over as much databit periods as there are databits taken into account. The most significant addressbit (third addresspart) An of a chosen page or segment is formed by the encoded databit to be transmitted itself while the subsequent addressbit A(n-1) (second addresspart) is formed by the preceding databit and the further addressbits Aj($n-2 \leqq j \leqq 0$) by the counting values generated by the counter 14.

A data output of the memory 15 is connected with a digital to analogue converter 16 which is further connected with a lowpass filter 17 whose output is connected with an amplifier 18. The modulated datasignal amplified by the amplifier 18 is supplied to the medium 9 by means of a medium coupling member 10.

Before further describing the operation of the transmitter shown in figure 7, the content of the first memory 15 will first be described. In this memory the modulated datasignal is segmentwise and digitally stored. In order to take into account the interbit interference the latter is considered in the stored signal in such a manner that for each pseudo-noise code each time four wave patterns are stored, being the four possible sequences of databits namely 00,01 , 10 and 11. For each of these sequences of databits with a chosen pseudo-noise code the modulated datasignal was determined and segmentwise stored in the memory.

The dimension of the first memory is an important data and is determined by the number of samples which have to be stored for each chip, the number of quantisation levels for each sample and the number of different pseudo-noise codes which have to be provided. The number of samples per chip ($N_s$) is determined by the quality of the low pass filter 17 and $N_s.f_c$, the clockfrequency of the digital-analogous converter 16. Mirror images of the transmission spectrum around the clock frequency are not desired. In the considered example $N_s = 32$, in such a manner that a clockfrequency of the transmitter equals 1.04 MHz. For each sample there are provided 256 quantisation levels (8 bits).

As already described, the substitution has for consequence an interchip and interbit interference. In order to take the latter into account in the data stored in the first memory 15, for each of the possible sequences of databits a composed wave pattern has been determined comprising the databit to be transmitted, even as the considered preceding bit. For the databit and the chosen preceding databit the different chips of which they are built up are substituted and truncated in order to take into account within the first time window the influence of the preceding bit. The influence of the interbit interference, considered in the time domain, is illustrated in figure 8. Consider for example a sequence of three subsequent databits to be transmitted do = 1, d1 = 0 and d2 = 0. This sequence is represented under a in figure 8. The bitperiod $T_b$ is the same for each databit to be transmitted. The substitution and thereafter truncation of each chip from each of the bits gives for each bit a wave shaped signal as shown under b in figure 8. From this figure it can clearly be seen that within the period of for example the bit d1 there is as well signal of the bit do as of the bit d2 present. This signifies that by forming the composed wave pattern destined to be stored into a memory the presence of those signals of the neighbouring bits has to be considered in order to taken into account the interbit interference.

The choice of the time window of the databit to be transmitted will determine which interference has to be taken into account. Under c and d in figure 8 two possible window choices for the databit to be transmitted are represented. When there is started from a truncation window having a period corresponding with the one of 1/2 databit, and with the choice of the first window as represented under c, wherein that first time window corresponds to the half of the bitperiod of the bit do and the half of the bitperiod of the bit d1, the first respectively the last quarter period only comprises information of the bit do respectively d1. The second quarter period, illustrated in figure 8 with the pattern f, still comprises a lot of the signal of the databit do however an influence of d1 is already present. The third quarter period, illustrated with the pattern g comprises the influence of the databit do and of the signal of d1. When d1 is considered as reference databit, than with a window choice as represented under c only the influence of the preceding databit do has to be taken into account.

With the second window choice as represented under d in figure 8 wherein the period of the window corresponds with the one of the databit and in the first quarter period of the window an influence of the databit do will be present in the signal of d1. In the fourth quarter period of the same window there is an influence present of the databit d2 in the signal of d1. The second and third quarter period comprise however only signals of the databit d1. The latter choice implies that as well the influence of the databit do as the one of the databit d1 have to be taken into account by building up the composed wave pattern.

The consideration of the influence of the one databit on the other is realised by adding together the different signals present at the same time. It will be clear that in the example shown in figure 8 there is supposed that by the substitution of each chip a truncation with a truncation window having a period corresponding to 1/2 databit was applied.

For the sake of clarity in the embodiment shown in figure 8 the choice of the first and the second time window were determined in such a manner that the time window period corresponds with the one of one databit. Other choices such as for example a period of more than 1 databit, for example 1.5 $T_b$ ($T_b$ = bitperiod), are also possible. The choice of the time window has each time to be made on beforehand in order to take into account the signal segments present within the chosen time window. In this manner and dependent from the chosen time window, there will be present within the time window either signal segments of the m (m $\in$ N) bits preceding the reference bit or signal segments of the m bits preceding and p (p $\in$ N) following the reference bit.

The signal segments present within the chosen time window than form a signal pattern which is stored in a memory. When the reference bit is preceded by m databits which within the time window all have a contribution to the signal pattern then there are $2^m$ possible signal patterns and a first series of $2^m$ signal patterns is stored. By $2^{m+p}$ (preceding and following) possible signal patterns there is stored a second series of $2^{m+p}$ possible signal patterns.

The selection of the correct memory segment is determined by the choice of the pseudo-noise code and by the actual and preceding differentially coded databit. By means of a counter 14 the necessary number of samples per databit is supplied to a digital to analogue converter.

Suppose now that the databit to be transmitted has a value "1" and that the preceding databit has a value "0" and that the first time window is the one such as represented in figure 8C. The address generator will now, by means of the delay element 12, form an address An-1 = 0. The further addresspart Aj is formed by the counter 14. Because a clockgenerator 13 generates clocksignals with a frequency $N_s \times f_c$ there will thus, within the period of one databit, be addressed and read that part of the first memory wherein the modulated datasignal for the transmission of the databit having a value "1" is stored. The modulated datasignal read from the first memory is subsequently supplied to the digital to analogue converter 16 in order to be transmitted.

The end amplifier 18 has the possibility to be brought into a high impedance state (tri-state) when the transmitter is not active in order to form an as high as possible load for other systems present on the medium.

When by taking into account the interbit interference as well the preceding as the following databit with respect to the reference bit to be transmitted have been considered, the addressing of the memory 15 is realised by making use of the considered m resp. p preceding, resp. following databits even as with the reference bit. When for example one preceding (m = 1) and one subsequent (p = 1) databit is taken into account, the addressing of the second memory is realised by delaying the preceding, resp. the data reference bit to be transmitted over two, resp. one bit period.

By the transmission of a first bit of a series of databits to be transmitted, in order to respect the method described hereabove, one or more pseudo preceding bits are chosen, for example with a value 0.

The modulated datasignal is thus injected on the medium by means of the transmitter. The transmitted signal will than be received by a receiver provided for receiving a spread spectrum signal. Figure 9 shows a first preferred embodiment of such a receiver which is part of a device according to the invention. The receiver comprises a medium coupling member 20 which is connected with a bandpass filter 21 provided for letting pass only signals belonging to the chosen frequency range. In this manner the noise outside the communication channel is suppressed. The received signal is thereafter supplied to a 1-bit analogue to digital converter 22 and thereafter sampled with a sampling frequency $f_s(23)$. The sampling frequency $f_s$ is completely determined by the coding parameters. In order to unequivocally sample the eye of the received datasignal, the carrier frequency $f_s$ has to be substantially an odd multiple $(2r + 1)$ of the sampling frequency $(4f_o = (2r + 1)f_s$. Preferably r is chosen equal to 0 if M =4 which signifies that 8 samples are realised a chip period $T_c$.

The thus obtained pulse sequence is than parallelly demodulated (XOR operation) by means of two waves, preferably block waves, with substantially the same frequency which thereupon are shifted in phase over 90° with respect to each other, which frequency corresponds with the one of the carrier. This implies that it is no longer necessary to let the phase of the internally generated carrier correspond with the one of the received. That demodulation is realised by supplying the sampled signal as well to a phase demodulator 24 as to a quadrature demodulator 19. Two locally generated carrier frequency signals are supplied to the phase 24 and the quadrature 19 demodulator which signals are phase shifted over 90° with respect to each other $[f_o(\varphi=0°);f_o(\varphi = 90°)]$.

The output of the phase resp. quadrature demodulator is supplied to a first resp. second input of the multiplexer 25, at which third input a signal with twice the sampling frequency $(2f_s)$ is applied. An output of the multiplexer 25 is connected to an addressinput of a third memory 28 which is part of a correlator 27. The addressinput of that third memory 28 is further connected with an output of the pseudo-noise code selector 32 and with an output of a second counter 30. The counter 30 is clocked with the sampling frequency $f_s$. The data output of the third memory 28 is connected with another adding unit 29, preferably a double parallel adding unit, which is also part of the correlator 27. The adding unit forms a phase resp. quadrature signal which is presented to a data processing unit 31, preferably a microprocessor. The data processing unit 31 is provided to form a control value for the second counter 30 and to derive from said phase and quadrature signal the received data.

Because in this embodiment only four samples a carrier period are fetched during sampling, there are theoretically only four possible phase relations. If both of said carriers are in phase or in counterphase, this results after demodulation in the chip sequence resp. the inverted chip sequence in the phase channel. If the carrier waves are in quadrature with respect to each other, than the chip sequence or its inverted are found back in the quadrature channel.

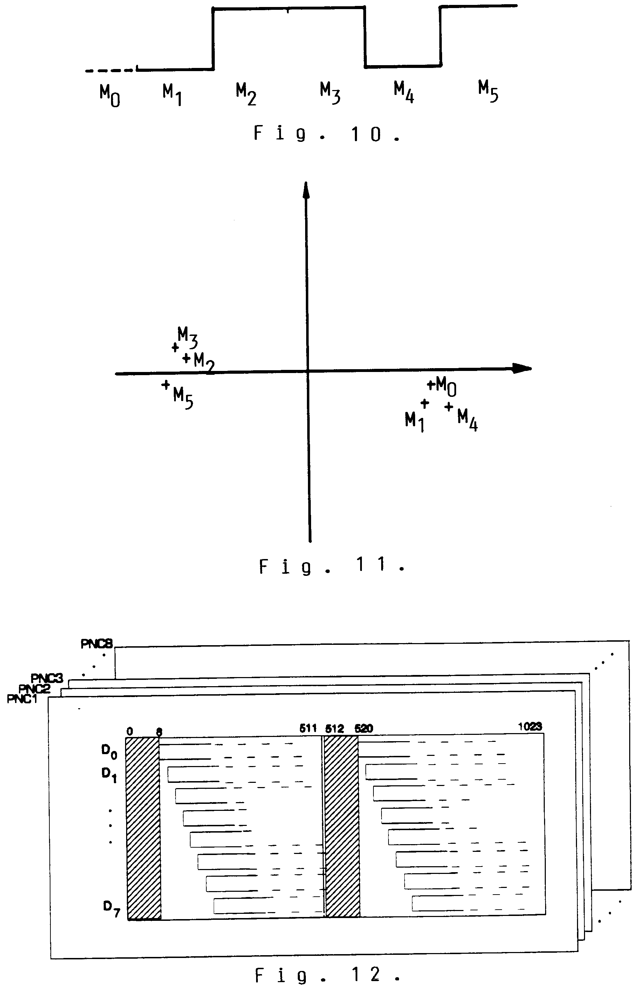

The use of a correlation value in order to recognize the transmitted data will now be described by means of the figures 10, resp. 11 wherein an example of a differentially encoded data resp. the position of the pertaining correlation value is shown. The values Mi(0 i 5) represent the transmitted databits. In figure 11 the horizontal axis gives the phase and the vertical axis the quadrature. When the results of the correlation of the demodulated chip sequences in the phase- and quadrature channel are set out with a resident pseudo-noise code in one plane such as given in figure 11, only one of the four possible points in that plane can be obtained. Data reconstruction is than possible by inspection of the position of a point in the correlation plane with respect to the previous. Due to the sequential inversion keying the value change of the transmitted databits, for example by a transition between $M_1$ and $M_2$, will have for consequence for the points in the correlation plane a change to the other half plane, in this example of the fourth to the second quadrant. Due to the differential encoding at the transmitter side there is univocally determined that when the point changes to the half plane in the correlation plane, a databit with value "0" has been transmitted. That data reconstruction by inspection of the position of the subsequent correlation points is performed in the receiver shown in figure 9 by means of the dataprocessing unit 31. Before data reconstruction can start it is however necessary to synchronize the input chip sequence with the corresponding resident pseudo-noise code. For this purpose the correlation curve will be recorded. The position of the highest top of this curve determines in fact the synchronization time moment.

A correlation point on the curve is formed by the sum of the absolute values of the calculated correlation values from the phase and quadrature channel. Via the multiplexer 25 the chip values $(2f_s)$ from the phase and the quadrature channel are alternately supplied to the correlater. Via an eightmultiple parallel operation 8 correlation values for each period of one databit are obtained in the phase and the quadrature channel. This signifies that the determination of a full correlation curve takes a time of N = 63 data bits.

Figure 12 illustrates an example of the third memory 28 being part of the correlater 27. Also the third memory is a page- or segmentwise organized memory, wherein for each stored pseudo-noise code a page or a segment (PNC1...PNC8) is reserved. Those pages or segments are for example addressed on the basis of the most significant addressbits which are generated by the pseudo-noise code selector 32. It will be clear that when there is only one pseudo-noise code used at the transmitter side, one page or one segment for the third memory 28 will be enough. Each page or segment comprises two parts, a first (for example the addresses 8 to 511 ; $63 \times 8 = 504$ sampling points per databit) resp. a second (for example the addresses 520 to 1023) part wherein the inverted resp. the chip values of the pseudo-noise code itself are stored. At the addresses 0 to 7 and 512 to 519 zeros are stored. The reason therefore will be explained hereunder. The pseudo-noise code is further 8 times (8 samples per chip period) stored in such a manner that each time they are shifted over one sampling value. The chip value $D_1$ is for example shifted over 1/8 chip with respect to $D_o$ so that the bit of $D_o$ on address 8 corresponds with the one of $D_1$ on address 9, while the bit of $D_o$ on address 511 corresponds with the one of $D_1$ on address 8.

The choice which memory part out of a page or a segment will be chosen is realized on the basis of the chip value of the chip sequence supplied by the multiplexer 25. Thus for example a chip value "1" resp. "0" will choose the pseudo-noise code value itself resp. its inverted. For this purpose the correlater is for example provided with a further address generator generating the appertaining address. That address generator cooperates with the second counter 30 which on its turn is initialized by the data processing unit.

Because the second counter 30 is clocked with a sampling frequency $f_s$ and the multiplexer supplies with a frequency $2f_s$ data to the third memory 28 with a frequency $2f_s$, for each sampling there is realised as well an addressing for the phase as the quadrature channel, which implies that for each sampling period as well a phase as the quadrature number are supplied to the adding unit 29. Because in this example there are $63 \times 8 = 504$ sampling values, the counter 30 addresses 504 memory locations per databit. Further there are for each addressed memory location 8 values ($D_o$, $D_1$, ...$D_7$) read. The values read while addressing the phase- and quadrature channel are supplied to a counter for the phase- resp. the quadrature channel in the adding unit 29. Those counters than count for each databit period the supplied values together.

When there is now synchronization of the supplied chip sequence with the one stored in third memory, than the substantially highest (504) or the lowest (0) correlation value is obtained, depending whether there is respectively operated synchronously with the code or with its inverted. Because the pseudo-noise code is eight times present, each time shifted over a sampling value (1/8 chip), there will be calculated eight correlation values in parrallel ($D_o$-$D_7$) in the phase- and quadrature channel.

By initialisation of the receiving procedure the data processing unit 31 will set the counter 30 on a predetermined value, in this embodiment the value 8, resp. 520, because on the memory locations 0-7 resp. 512-519 only zeros are present. Also by that initialisation, each time after 504 samplings have been made, the added phase and quadrature correlation values will be supplied to the data processing unit which will check their magnitude. For this purpose the data processing unit checks if the correlation value exceeds a predetermined threshold value. If this is not the case, than the correlation value can only be generated by another signal than the one mixed with the chosen pseudo-noise code. By correlation with the stored pseudo-noise code the correlation value must at least exceed that threshold value. In case of non-exceeding of that threshold value the data processing unit will again initialize the counter on 8 resp. 520 and this each time until that threshold value is exceeded.

When that threshold value is exceeded this signifies that a data signal has been received. The data processing unit will than start with the set-up of the whole correlation curve on the basis of the received phase- and quadrature values. The data processing unit will subsequently and synchronously with the stored pseudo-noise code set out the position of the received phase and quadrature values in the correlation plane such as given in figure 11, and will deduce therefrom the bit value of the transmitted data. If the subsequent databits are in the same halfplane resp. in a different halfplane than the bitvalue is "1" resp. "0", supposed that the data has been differentially encoded and has been mixed with the pseudo-noise code by means of a sequentially inverted keying (SIK).

Once a whole databit period has lapsed after exceeding the threshold value the data processing unit will bring, during the synchronization operation, the preset value of the counter 30 resp. 512 to zero instead as to eight resp. 520 in order not to calculate each time the same 8 correlation values of the curve for each subsequent received databit. This means that for each received databit a time delay of one chip is considered by addressing the stored pseudo-noise code. Because the first 8 memory locations only comprise zeros, they indeed do not have any contribution to the correlation sum. The position of the correlation peak determines for the data processing unit the preset address in order to realize the synchronization of both codes. After synchronization the dataprocessing unit has 8 correlation values after the lapse of each databit period.

The thus determined correlation curve has a correlation peak showing a maximum. The position of that maximum of the correlation peak is now used for a tracking operation. Because the dataprocessing unit can shift, by means of the adjustment of the second counter, the addressing of the stored code with respect to the incoming chip segments over 1/8 chip left or right, frequency drift effects can in this manner be taken into account.

At each new received set of phase- and quadrature values the dataprocessing unit will preferably check if said threshold value has been exceeded, in order not to interprete perturbations as databits. If that threshold value is no longer exceeded the data extraction will no longer take place and the counter 30 will again be initialized on 8 resp. 520.

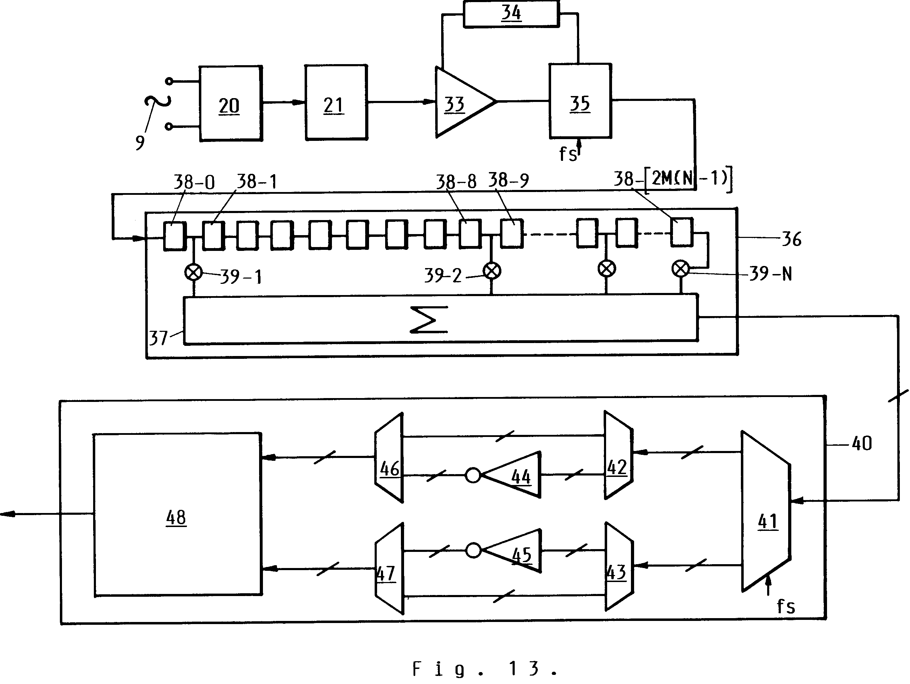

A second embodiment of a receiver according to the invention is shown in figure 13. The band pass filter 21 is connected with an amplifier 33 whose output is connected with a multiple bit analogue to digital converter 35. Amplifier 33 and converter 35 are further connected with an automatic gain control member 34 controlling the amplification factor, in such a manner that independently of the intensity of the inputsignal (signal + channel noise) the range of the converter is optimally used. The sampling frequency $f_s$ of the converter 35 is here also chosen in such a way that two conversions take place within the time limit of the eye, thus also $f_s = 4.f_0$.

The converter 35 is connected with a finite impuls response (FIR Finite Impulse Response) filter 36 having as its coefficients the selected pseudo-noise code chip values. The FIR filter is built up of a series of serially connected delay elements 38-i ($0 \leq i \leq 2M(N-1)$) each delaying the supplied chip value over the time of one sampling period. The connection lines between the delay elements 38-(2M.p) and 38-[(2M.p)+1] (with $0 \leq p \leq N-1$) are each time connected with a multiplier 39-(p+1) which is each time provided for multiplying the received chip value with the value of the chosen pseudo-noise code. It will be clear that when the FIR filter 36 has to be suitable to operate with more than one pseudo-noise code, said values have to be present for each pseudo-noise code. This is for example realized by providing the multipliers with a buffer wherein those values have to be stored. The available pseudo-noise code values can than be stored in a memory element. By initializing the filter the corresponding pseudo-noise code values are fetched from the memory in function of the selected pseudo-noise code and stored in the respective buffers.

The multipliers are further connected with an adder 37 provided for adding together the formed product values. That adder than forms the result :

$$y_n = \sum_{i=0}^{N-1} b_{n-8i} \, a_i$$

whereby $b_{n-8i}$ represents the approximation for the $(N-i)^{th}$ chip and $a_i$ the supplied chip value of the selected pseudo-noise code. In this manner there is implemented a "shifting correlater" which supplies synchronously with the sampling frequency $f_s$ correlation values.

If the received analogous signal is formally considered, than it has the following pattern :

$$x_{bp}(t) = \left\{ Re \; x_{lp}(t) \cdot e^{j2\pi f_0 t} \cdot e^{j\vartheta} \right\}$$

Hereby $\vartheta$ represents the phase rotation, introduced by the used transmission channel and eventually present frequency shift due to the difference in clock frequency between transmitter and receiver. This signal is sampled with a frequency $f_s$. If now $f_s = 4*f_0$ such as in the chosen embodiment, than the following simplified equation is obtained :

$$X_{bp}\left(\frac{k}{f_s}\right) = Re \left\{ x_{lp}\left(\frac{k}{f_s}\right) \cdot e^{j\frac{\pi}{2}k} \, e^{j\vartheta} \right\}$$

wherein $t = k/f_s$.

In the supposition that $x_{lp}(t)$ is real, then :

$$x_{bp}\left(\frac{k}{f_s}\right) = x_{lp}\left(\frac{k}{f_s}\right) \cdot \left(\cos\vartheta \cdot \cos\left(k\frac{\pi}{2}\right) - \sin\vartheta \cdot \sin\left(k\frac{\pi}{2}\right)\right)$$

The values supplied by the correlator 36 now have the pattern given hereunder (with k=n-2Mi)

12

$$y_n = [\sum_{i=0}^{N-1} x_{Ip} \; ( \frac{n \; - \; 2M}{f_s} ) a_i ] \; \cos(\vartheta + n \frac{\pi}{2} ) \; = \; C(n) \; . \; \cos \; (\vartheta + n \frac{\pi}{2})$$

If now four subsequent values of the correlator 36 are considered, the following relation is found back :

$n = 0$      $C(0) \; . \; \cos\vartheta = C_{phase}(0)$

$n = 1$      $C(1) \; . \; -\sin\vartheta = -C_{square}(1)$

$n = 2$      $C(2) \; . \; -\cos\vartheta = C_{phase}(2)$

$n = 3$      $C(3) \; . \; \sin\vartheta = C_{square}(3)$

This shows that for each two correlation samples, the projection on the phase axis of the correlation plane is obtained, for the correlation of the received datasignal with the selected pseudo-noise code, but each time with a changing sign. Shifted over 1/8 chip the same situation is found back for the protection on the quadrature axis of the correlation plane.

In order to recover all the 2M*N values (504) of the correlation curve for each channel, it is sufficient, to change the sign every two correlation samples and to introduce by means of interpolation or simply repeating, the missing correlation samples of the considered channel. That operation is executed by a dataprocessing unit 40 having an input connected with an output the FIR filter 36 for receiving the correlation values. This dataprocessing unit comprises a first multiplexer 41 which is controlled by a control signal having a frequency $f_s$. The multiplexer 41 separates the phase- and quadrature values out of the stream of correlation values. The phase- resp. quadrature value is presented to a second 42 resp. a third 43 multiplexer. The signal received by the multiplexer 42 resp. 43 is directly and inverted via inverters 44 resp. 45 supplied to a fourth 46 resp. a fifth 47 multiplexer. The outputs of the multiplexer 46, 47 are connected with a synchronization and data reconstruction unit 48, which also is part of the dataprocessing unit 40.

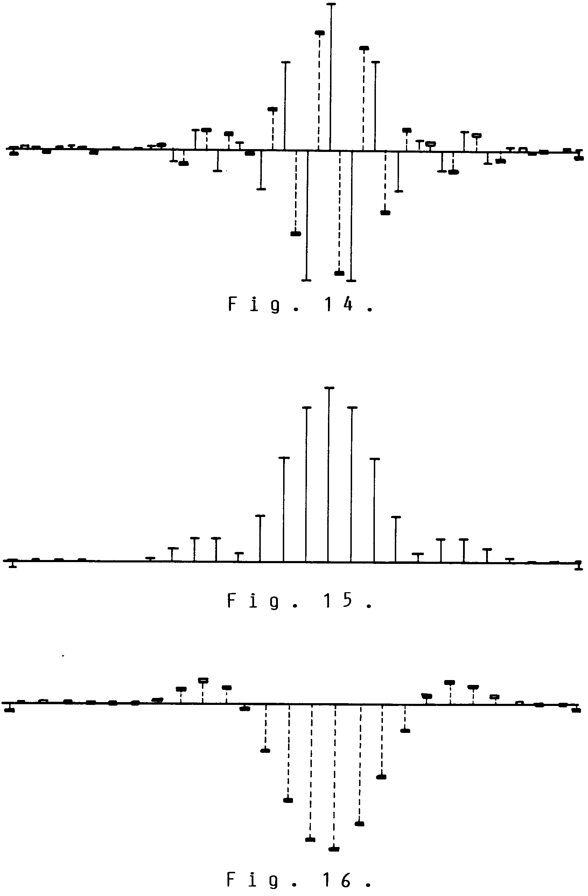

Figure 14 shows the correlation values at the output of the FIR filter 36. Hereby the full resp. broken lines represent the samples of the phase- resp. quadrature channel.

The dataprocessing unit 40 determines the protection on the phase axis resp. the quadrature axis such as shown in fig. 15 resp. 16 and determines from the phase and quadrature correlation samples the whole correlation curve, which is determined from the sum of the square values of the corresponding samples of both channels.

The presence of data at the input is determined by the determining the ratio of the highest with the second highest maximum (minimum 2 chips shifted with respect to the highest) of the correlation values to be followed. If this ratio exceeds a predetermined further threshold value, than data is present and from that time on there is searched within a window of 504 values (data bit) for the maximum of the correlation value. The phase- and quadrature projections corresponding with those value determine a point in the correlation plane which is compared with the preceding point (preceding databit) for realising data reconstruction, such as described in the embodiment according to figure 9. Once synchronized it is no longer necessary to search for a maximum in the whole window of 504 values. A small window can be used for that purpose. Tracking is not really necessary with this receiver implementation because there is a continuous presence of correlation values. If however a smaller window is used, possible frequency drift can be taken into account by shifting the search window by software in the correct direction, taking into account the established shift at the preceding bits.

Synchronisation only takes the time of one databit period by this receiver implementation. Because of its form that receiver implementation is also very suitable for integration.

## Claims

1. A method for transmitting data within a predetermined frequency range over a noisy medium, in particular the electricity mains network, wherein a spread spectrum data independent signal formed by a pseudo noise code comprising $N(N \in \mathbb{N} \setminus \{0\})$ chips per databit is generated and mixed with the data to be transmitted for forming a spread spectrum datasignal, which datasignal is modulated on a carrier having a frequency $f_o$ chosen within said frequency range and wherein a chip frequency $f_c$ is used which is substantially a whole fraction $(M, 2f_o = f_cM)$ of the double of the carrier frequency and at least 50 % of the power of the modulated datasignal is transmitted within said frequency range, and wherein a correlation operation with the pseudo noise code is applied to the received data signal for extraction of the data, characterized in that each chip of the data signal to be transmitted is each time substituted while maintaining the chip value by a wave shaped signal having a raised cosine spectrum, which spectrum is substantially inside said fre-

EP 0 496 717 A1

quency range which wave shaped signal is thereafter truncated by means of a truncation window whereby the spectrum broadening is kept limited within said frequency range in order to obtain a further wave shaped signal which is, considered in the time domain, limited within the time of a predetermined period, which truncation window is chosen in such a manner that at least the main lobe of the spectrum of said wave shaped signal is substantially completely inside said frequency range and wherein the signal contribution of the different wave shaped signals at a same time are each time added together.

2.  A method as claimed in claim 1, characterized in that for said truncation window there is chosen a period corresponding with the one of one databit.

3.  A method as claimed in claim 1 or 2, characterized in that for said raised cosine spectrum there is chosen a rolloff factor comprised within 0.25 and 0.75.

4.  A method as claimed in anyone of the claims 1-3, characterized in that said modulated datasignal is transmitted within the frequency range situated between 40 and 90 KHz, and said datasignal is modulated on a carrier having a frequency of substantially 65 KHz and wherein M = 4 is chosen for said fraction.

5.  A method as claimed in anyone of the claims 1, 2, 3 or 4, characterized in that the data is differentially coded before it is mixed with said data independent signal.

6.  A method as claimed in anyone of the claims 1, 2, 3, 4 or 5, characterized in that a sequential inversion keying (SIK) is applied while mixing the data and the pseudo noise code.

7.  A method as claimed in anyone of the claims 1-6, characterized in that for a databit to be transmitted there is chosen a first time window extending over at least a first fraction of a bitperiod of the databit to be transmitted and at least a second fraction of the bitperiod of at least one databit preceding the databit to be transmitted and wherein for each value of the databit to be transmitted there is composed a first series of $2^m$ signal patterns, m indicating the number of bits preceding the databit to be transmitted of which signalsegments are present within the first time window, and wherein an $i^{th}(1 \leq i \leq 2^m)$ signal pattern of said first series comprises the wave shaped signal segment belonging to the first time window and obtained by substitution and truncation and belonging to said value of the databit to be transmitted as well as the wave shaped signal segments belonging to that first time window obtained by substitution and truncation and which belong to the $i^{th}$ bitcombination of the $2^m$ possible bitcombinations, which first series is stored in a first memory.

8.  A method as claimed in anyone of the claims 1-6, characterized in that for a databit to be transmitted there is chosen a second time window extending over one bitperiod of the databit to be transmitted and wherein for each value of the databit to be transmitted there is composed a second series of $2^{(m + p)}$ signal patterns whereby m, respectively p represents the number of databits preceding respectively following the databit to be transmitted of which signal segments are present in the second time window, and wherein an $i^{th}$ $(1 \leq i \leq 2^{m + p})$ signal pattern of said second series comprises the wave shaped signal segment belonging to the second time window and obtained by substitution and truncation and belonging to said value of the databit to be transmitted as well as the wave shaped signal segments belonging to that second time window obtained by substitution and truncation and belonging to the $i^{th}$ bitcombination of $2^{m + p}$ possible bitcombinations, which second series is stored in the second memory.

9.  A method as claimed in claim 7, characterized in that the signal patterns of said first series are segmentwise stored into the first memory on address locations which are addressable on the basis of a databit sequence of the data to be transmitted, and that for transmitting the modulated datasignal for each databit to be transmitted, an address is generated on the basis of the bitvalue of the databit to be transmitted and the bitvalue of the m databits preceding the databit to be transmitted and wherein said first memory is addressed by said generated address.

10. A method as claimed in claim 8, characterized in that the signal patterns of said second series are segmentwise stored into the second memory on address locations which are addressable on the basis of a databit sequence of the data to be transmitted, and that for transmitting the modulated datasignal for each databit to be transmitted, an address is generated on the basis of the bitvalue of the databit to be transmitted and the bitvalue of the m preceding and the p databits following the databit to be transmitted and

14

wherein said second memory is addressed by said generated address.

11. A method as claimed in anyone of the claims 1-10, wherein for deriving a chip sequence the received modulated datasignal is sampled and demodulated, and wherein the chip sequence is synchronised with a pseudo-noise code generated at the receiver side and corresponding with the one used in the transmitted data signal, characterized in that, for said synchronisation use is made of a third memory wherein the pseudo noise code values and their inverse are stored, which third memory is addressed by means of the demodulated elements of the chip sequence.

12. A method as claimed in claim 11, wherein for the correlation operation there is checked if the correlation value exceeds a predetermined threshold value, and in that a full correlation curve is recorded after exceeding said threshold value, characterized in that while recording a full correlation curve there is delayed over 1-chip period for each databit period when addressing the stored pseudo-noise code.

13. A method as claimed in claim 12, characterized in that the correlation curve comprises a correlation peak having a maximum and that there is applied a tracking operation on the basis of the position of the maximum of the correlation peak.

14. A method as claimed in claim 11, characterized in that the received modulated datasignal is supplied to a finite impulse response (F.I.R.) filter for correlation with said pseudo-noise code.

15. A method as claimed in claim 12 or 14, characterized in that by mixing the data and the pseudo noise code a sequential inversion keying is applied and that for extraction of the data value from the received modulated datasignal there is checked if with respect to a previous determination a jump from the one to the other half plane within the points in the correlation plane has taken place.

16. A method as claimed in claim 11 or 14, characterized in that an n-bits ($n \geqq 1$) analog-digital conversion is applied to the received modulated datasignal, and that the presence of data in the modulated datasignal is checked by determining the ratio of the greatest with the second greatest maximum of the correlation values and by verifying if said ratio exceeds a further predetermined threshold value.

17. A method as claimed in claim 14, characterized in that there is sampled with a sampling frequency which is four times the carrier frequency and that the signal output of the finite impulse response filter comprises a sequence of phase and quadrature values even as the inverted values of those phase and quadrature values and wherein said sequence is separated in a first respectively a second subsequence comprising the phase respectively the quadrature values, and wherein the values of each subsequence are each time converted to a same sign.

18. A device destined for executing the method as claimed in anyone of the claims 1 to 6, which device comprises a transmitter provided with a datasignal generator, which datasignal is formed by mixing a spread spectrum data independent signal formed by a pseudo noise code comprising $N(N \in \mathbb{N} \setminus \{0\})$ chips a databit with the data to be transmitted, which transmitter is provided with modulation means provided for modulating the datasignal to be transmitted on a carrier with a frequency $f_o$ chosen within said frequency range, which transmitter further comprises a chip generator for generating said chips with a chip frequency $f_c$ which is a substantially whole fraction (M) of the double of the carrier frequency $f_o$, and wherein the modulation means and the chipgenerator are provided for transmitting at least 50 % of the modulated datasignal power within said frequency range, which device further comprises a receiver with a correlator provided for applying a correlation operation with the pseudo-noise code to the received data signal in order to extract the data, characterized in that, the transmitter comprises substitution means provided for substituting while maintaining the chip value each chip of the data signal to be transmitted by a wave shaped signal having a raised cosine spectrum and being substantially inside said frequency range, which transmitter further comprises truncation means connected with said substitution means and which are provided for truncating said wave shaped signal by a truncation window whereby the spectrum broadening is limited within said frequency range in order to obtain a further wave shaped signal which is, considered in the time domain, limited within the time of a predetermined period, which transmitter comprises adding means connected with said truncation means and provided for each time adding together the signal contribution of the different wave shaped signals at a same time.

**19.** A device as claimed in claim 18, characterized in that, said substitution means are provided for determining a first time window for a databit to be transmitted, which first time window extends over at least a first fraction of the bit period of the databit to be transmitted and at least a second fraction of the bitperiod of at least one databit preceding the databit to be transmitted, which transmitter further comprises a signal pattern generator connected with the substitution means and provided for generating a first series of $2^m$ signal patterns for each value of the databit to be transmitted whereby m indicates the number of databits preceding the databit to be transmitted of which signal segments are present in the first time window and wherein an $i^{th}$ ($1 \leq i \leq 2^m$) signal pattern of said first series comprises the wave shaped signal segment belonging to the first time window and obtained by substitution and truncation and belonging to said value of the databit to be transmitted even as the wave shaped signalsegments belonging to that first time window and obtained by substitution and truncation belonging to the $i^{the}$ bitcombination of the $2^m$ possible bitcombinations.

**20.** A device as claimed in claim 18, characterized in that, said substitution means are provided for determining a second time window for a databit to be transmitted, which second time window extends over one bitperiod of the databit to be transmitted, which transmitter further comprises a signal pattern generator connected with the substitution means and provided for generating a second series of $2^{m + p}$ signal patterns for each value of the databit to be transmitted wherein m, respectively p is the number of databits preceding respectively following the databit to be transmitted of which signal segments are present in the second time window and wherein an $i^{th}$ ($1 \leq i \leq 2^{m + p}$) signal pattern of said second series comprises the wave shaped signal segment belonging to the second time window and obtained by substitution and truncation and belonging to said value of the data bit to be transmitted even as the wave shaped signal segments belonging to that second time window and obtained by substitution and truncation and belonging to the $i^{th}$ bitcombination of the $2^{m + p}$ possible bitcombinations.

**21.** A device as claimed in claim 19, characterized in that said signal pattern generator is formed by a first memory and wherein said transmitter comprises a first address generator connected with an address input of said first memory, said address generator has a first input for receiving a databit to be transmitted and a second input for receiving a clocksignal formed on the basis of the chip frequency, which address generator further comprises a delay element for delaying over at least one databit transmission period the supplied databit, which address generator is provided for generating an address on the basis of the supplied databit and the databit supplied by the delay element.

**22.** A device as claimed in claim 20, characterized in that, said signal pattern generator is formed by a second memory and wherein said transmitter comprises a second address generator connected with an address input of said second memory, which second address generator comprises a third input for receiving a databit to be transmitted and a fourth input for receiving a clocksignal formed on basis of the chip frequency, which address generator further comprises a first respectively second delay element for delaying the supplied databit over one respectively two databit periods, which address generator is provided for generating an address on the basis of the supplied databit and the databit output by the first respectively the second delay element.

**23.** A device as claimed in claim 18, wherein the receiver comprises a sampling unit provided for sampling the received modulated data signal with a sampling frequency which is substantially a whole multiple of the modulation frequency $f_o$, which sampling unit is connected with a demodulator provided for demodulating the sampled signal by means of two waves which have substantially a same frequency and which are relative to each other substantially 90° phase shifted and which frequency corresponds with the one of the carrier and for therefrom deriving a chip sequence, which receiver further comprises a synchronisation unit provided for synchronising the chip sequence with a pseudo-noise code generated at the receiver side and which corresponds with the one used for the transmitted datasignal, characterized in that the synchronisation unit comprises said correlator, which correlator comprises a third memory provided for storing the pseudo-noise code and the inverse thereof.

**24.** A device as claimed in claim 23, characterized in that, the synchronisation unit comprises a further address generator having an input for receiving the chip sequence elements, which further address generator comprises a second counter having a clock input for receiving a sampling frequency signal and which is provided for generating a second counting value on the basis of said sampling frequency signal, which further address generator is provided for generating an address formed by a first respectively a second address part comprising said chip sequence element respectively said second counting value.

25. A device as claimed in claim 23, characterized in that, the third memory is provided for storing at least two different pseudo-noise code sets with each time their inverse value.

26. A device as claimed in claim 23, characterized in that, the receiver comprises a multi-bit analog-digital convertor.

27. A device as claimed in claim 23 or 26, characterized in that, said correlator comprises a finite impulse response filter which is provided with serially switched delay elements for each time delaying the supplied chip sequence elements over a sampling period, which filter further comprises multipliers provided for multiplying the supplied chip value with the value of the pseudo-noice code and for therewith forming a product value, which multipliers are further connected with an adder provided for adding the supplied product values and thereof forming a correlation value as well in the phase as the quadrature channel.

28. A device as claimed in claim 27, characterized in that the sampling unit is provided for sampling the received modulated data signal with a sampling frequency which is four times the carrier frequency and that the finite impulse response filter is provided for output a signal comprising a sequence of phase- and quadrature values even as the inverse values of these phase- and quadrature values, which receiver further comprises separation means provided for separating said sequence in a first respectively a second subsequence comprising the phase respectively the quadrature values, which separation means are further provided for rendering uniform the value of the subsequence with respect to their sign.

29. Transmitter destined to be used in a device as claimed in anyone of the claims 18 to 22, characterized in that the transmitter comprises said modulation means.

30. Receiver destined to be used in a device as claimed in anyone of the claims 23 to 28, characterized in that the receiver comprises a sampling unit.

Fig. 1.

Fig. 2.

Fig. 3.

F i g . 4 .

F i g . 5 .

F i g . 6 .

Fig. 7.

fo($\varphi$=0°)

fs

2fs

fs

fo($\varphi$=90°)

Fig. 9.

Fig. 8.

$M_0$  $M_1$  $M_2$  $M_3$  $M_4$  $M_5$

Fig. 10.

$M_3$
$M_2$
$M_5$

$M_0$
$M_1$  $M_4$

Fig. 11.

PNC8
PNC3
PNC2
PNC1

0    8                    511 512 520                    1023

$D_0$
$D_1$

$D_7$

Fig. 12.

Fig. 13.

Fig. 14.

Fig. 15.

Fig. 16.

European Patent
Office

**EUROPEAN SEARCH REPORT**

Application Number

EP    92 87 0010

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | HEWLETT-PACKARD JOURNAL. vol. 38, no. 5, 1987, PALO ALTO US pages 35 - 40; R.PIETY: 'INTRABUILDING DATA TRANSMISSION USING POWER-LINE WIRING' * page 35, right column, line 1 - line 4 * * page 37, right column, line 27 - page 38, left column, line 46 * | 1,6,18, 27 | H04B3/54 H04B1/66 |
| A | JOURNAL OF THE INSTITUTION OF ELECTRONIC AND RADIO ENGINEERS. vol. 58, no. 3, May 1988, LONDON GB pages 117 - 124; ALLAN ET AL.: 'A high performance satellite data modem using real-time digital signal processing techniques' * page 118, left column, line 8 - right column, line 23 * * page 119, left column, line 9 - right column, line 4 * | 1,18 | |
| A | EP-A-0 132 988 (ATT) * page 7, line 8 - page 9, line 12 * | 1,18 | **TECHNICAL FIELDS SEARCHED (Int. Cl.5)** |
| D,A | EP-A-0 195 573 (EMI) * page 4, line 21 - page 6, line 7 * * line 18 - page 7, line 14 * | 1,4,18 | H04B H04L |
| A | GB-A-2 188 217 (MULTITONE) * page 2, line 9 - line 37 * | 1,8-10, 18,21 | |
| A | US-A-4 630 283 (SCHIFF) * column 7, line 6 - line 61 * | 1,18,23 | |
| A | US-A-4 707 839 (ANDREN ET AL.) * column 7, line 27 - line 47 * | 27 | |

The present search report has been drawn up for all claims

| Place of search | Date of completion of the search | Examiner |
|---|---|---|
| THE HAGUE | 27 APRIL 1992 | HOLPER G.E.E. |

EPO FORM 1503 03.82 (P0401)